# EUROPEAN PATENT SPECIFICATION

(11) **EP 0 976 452 B1**
(45) Date of publication and mention of the grant of the patent: **23.08.2006**
(21) Application number: 99112779.6
(22) Date of filing: 02.07.1999
(51) Int. Cl.: B01J 37/20, C10G 45/08

(54) **Process for presulfurizing a desulfurization catalyst used in a hydrodesulfurization unit of petroleum refinery and presulfurization promoter**
Verfahren zur Vorsulfidierung eines Entschwefelungskatalysators zur Verwendung in einer Hydroentschwefelungsanlage einer Erdölraffinerie und Hydroentschwefelungspromotor
Procédé de présulfuration d'un catalyseur de désulfuration utilisé dans une unité d'hydrodésulfuration d'une raffinerie pétrolière et un promoteur de désulfuration

(30) Priority: 02.07.1998 JP 18754798; 23.07.1998 JP 20785598
(43) Date of publication of application: 02.02.2000
(73) Proprietor: NIPPON SHOKUBAI CO., LTD., Osaka 541-0043 (JP); Arkema France, 92800 Puteaux (FR)
(72) Inventor: Itoh, Hirokazu, Kobe-shi, Hyogo (JP); Abe, Kazuaki, Suita-shi, Osaka (JP); Arita, Yoshihiro, Osaka-shi, Osaka (JP); Jodo, Einosuke, c/o Elf Atochem Japan, 1 Awatacho, Chudoji, Shimogyo-ku, Kyoto (JP); Hata, Kazuya, c/o Elf Atochem Japan, Chiyoda-ku, Tokyo (JP); Kawamura, Tetsushi, c/o Elf Atochem Japan, Chiyoda-ku, Tokyo (JP)
(74) Representative: Cresswell, Thomas Anthony

(56) References cited:
- EP-A- 0 300 629
- EP-A- 0 329 499
- EP-A- 0 506 206

## Description

### Background of the Invention

### Field of the invention

This invention relates to a process for presulfurizing a desulfurization catalyst for use in hydrodesulfurization, and to use of a presulfurization promoter in presulfurization of a desulfurization catalyst for use in a hydrodesulfurization unit of a petroleum refinery for high molecular weight hydrocarbons.

In particular, this invention relates to use of a presulfurization promoter in hydrodesulfurization of metal oxide in desulfurization catalyst, which is necessary at the start of operation when a desulfurization catalyst is charged freshly in a fixed bed.

### Description of related art

In petroleum refinery of high molecular hydrocarbons, hydrodesulfurization is widely used. The usual hydrodesulfurization is effected with a catalyst of oxide or sulfide of metal such as cobalt, nickel, molybdenum or tungsten supported on carriers of alumina or the like. Since hydrodesulfurization and hydrodesulfurization catalysts are well-known and reported in many documents and are not a subject of the present invention, they will be not described here in details. Their short explanation is described in "Chemical Dictionary 5" pages 64 to 65, published by Kyouritsu-Shupan, October 15, 1981.

In hydrodesulfurization, at the start of operation or when a hydrodesulfurization catalyst is freshly charged or packed in a fixed bed, the hydrodesulfurization catalyst must be subjected to "presulfurization" or a preliminary sulfurization treatment before a new petroleum refinery cycle starts. The conventional presulfurization technique is classified into so-called "feed sulfurization method" and "chemical spiking method".

In the "feed sulfurization method", sulfur-containing organic compounds contained in a feed stream are hydrocracked at relatively higher temperature (about 260 to about 320 °C) to produce hydrogen sulfide which is then contacted with metal oxide supported on freshly charged catalyst to produce metal sulfides.

In the "chemical spiking method", artificially prepared sulfur-containing organic compound which is rich in sulfur content is added to a feed stream and is then hydrocracked at relatively lower temperature (about 180 to about 260 °C) to produce hydrogen sulfide with which freshly charged catalyst is sulfurized preliminary.

In the "feed sulfurization method", sulfur-containing organic compounds contained in a feed stream are hydrocracked at relatively higher temperature as about 280 °C and react with hydrogen stream to produce hydrogen sulfide, so that undesired unsaturated hydrocarbons are produced. The reaction temperature, however, can not be elevated rapidly, because a rapid elevation of temperature results in generation of unsaturated hydrocarbons, which will be a cause of undesirable deposition of cokes. Therefore, the reaction temperature must be elevated gradually so that efficiency of the preliminary sulfurization is sacrificed. In fact, this method requires a longer time.

In the "chemical spiking method", the reaction time can be reduced remarkably. However, the "chemical spiking method" requires a larger amount of expensive sulfur-containing organic compound and hence is not economical.

Inventors found such a fact that an amount of hydrogen sulfide can be increased remarkably when a compound having mercapto alkylthio group co-exists together with sulfur-containing compounds contained in a feed stream which is a source of hydrogen sulfide for presulfurizing a new catalyst used in hydrodesulfurization.

In the present invention, a compound having mercapto alkylthio group is incorporated in a feed stream in a temperature range where unsaturated hydrocarbons causing trouble of undesired cokes are difficultly produced (about 180 to about 260°C) to promote hydrocracking of sulfur compounds in the feed stream, so that a larger amount of hydrogen sulfide produced is contacted with metal oxide in the catalyst.

EP-A-0300629 describes the production of a catalyst for the hydrotreatment of a hydrocarbon oil in which an active metal component supported on an inorganic oxide carrier is contacted with at least one mercaptocarboxylic acid, amino-substituted mercaptan, divalent mercaptan or thio acid.

EP-A-0506206 describes a supported catalyst for hydrotreating hydrocarbons comprising a metal oxide and at least one bivalent mercaptan, amino-substituted mercaptan or thiocarboxylic acid.

### Summary of the Invention

According to one aspect of the invention, there is provided a process for presulfurizing a desulfurization catalyst for use in hydrodesulfurization which presulfurization process comprises sulfurizing the fresh metal oxide in said desulfurization catalyst using hydrogen sulfide produced from sulfur-containing compounds in a feed stream, wherein the presulfurization is effected in the presence of a least one compound having at least one mercapto alkylthio group, which is added in a proportion of from 10 ppm to 0.5% by weight with respect to the total amount of said feed stream, the said compound having at least one mercapto alkylthio group being a compound of formula (I):

(R¹, R², R³, R⁴, R⁵, R⁶) - (S- CₘH₂ₘ -SH)ₙ (I)

in which:
each of R¹, R², R³, R⁴, R⁵ and R⁶ is an organic group and is bonded to each other through one or more than one chemical bonds, at least one of R¹, R², R³, R⁴, R⁵ and
R⁶ must exist in the said compound and the total carbon number of R¹, R², R³, R⁴, R⁵ and R⁶ is from 2 to 28,
m is an integer of from 2 to 4, and
n is an integer of from 1 to 6.

Thus, the invention provides a presulfurization process for a desulfurization catalyst to be used in a hydrodesulfurization unit of petroleum refinery of high molecular hydrocarbons, in which fresh metal oxide in the desulfurization catalyst is sulfurized with hydrogen sulfide produced from sulfur-containing compounds in a feed stream, *characterized in that* the presulfurization is effected at lower temperature in the presence of at least one compound of formula (I), which is added 10 ppm to 0.5 % by weight with respect to the total amount of the feed stream.

According to a second aspect, the present invention provides use of a presulfurization promoter, which promoter comprises an organic compound having at least one mercapto alkylthio group, and of formula (I), in presulfurization of a desulfurization catalyst for use in a hydrodesulfurization unit of a petroleum refinery for high molecular hydrocarbons.

Compounds of formula (I), which may be used according to the invention, include those of formula (A):

R-Q-S-C_{z}H_{2z}SH (A)

where
z is an integer of 2 to 4
Q is alkylene of 1 to 4 carbons or a bond,
R is methyl or phenyl when Q is a bond and when Q is alkylene, R is selected from
HS, HO, HS(C_{y}H_{2y}S)_{w}, HO(C_{y}H_{2y}S)_{w}, CH₃S, CH₃CH₂, CH₃, CH₃OCO(C_{y}H_{2y}S)ᵥ, or CH₃(CₓH₂ₓ)OCO
wherein
v is 0 or 1,
w is an integer of 1 or more,
x is an integer of 1 to 7, and
y is an integer of 1 to 4.

Compounds of formula (I), which may be used according to the invention, also include those of formula (B) 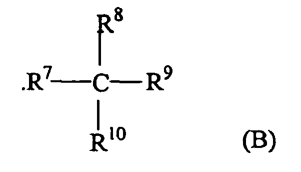 in which:
at least one of R⁷ to R¹⁰ is a group of formula (C):

   -CH₂OCO(CₐH₂ₐS)_{b}C_{c}H_{2c}SC_{d}H_{2d}SH (C)

   in which b is 0 or an integer of from 1 to 4, a is an integer of from 1 to 4, c is 0 or an integer of from 1 to 4, and d is an integer of from 2 to 4; and the remainder of R⁷ to R¹⁰, if any, are selected from: HSC_{q}H_{2q}COOCH₂- wherein q is an integer of from 1 to 4, CᵣH₂ᵣ₊₁ wherein r is an integer of from 1 to 4, HOCH₂-, C₂H₅, and a group of formula (D): 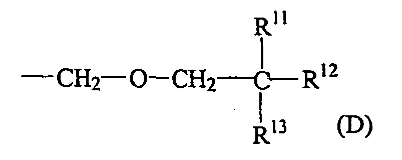
in which each of R¹¹, R¹² and R¹³ is selected from a said group of formula (C), HSC_{q}H_{2q}COOCH₂- wherein q is as defined above, and HOCH₂-.

The following are examples of compounds of formula (I), which may be used according to the invention:
HSCH₂CH₂SCH₂CH₂SH,
HSCH₂CH₂SCH₂CH₂SCH₂CH₂SH,
HOCH₂CH₂SCH₂CH₂SH
HO(CH₂CH₂S)ₓ H ("x" is an integer equal to 3 or higher than 3)
HO(CH₂CH(CH₃)S)ₓ H ("x" is an integer equal to 2 or higher than 2)
CH₃SCH₂CH₂SH
CH₃SCH₂CH₂SCH₂CH₂SH
CH₃CH₂CH₂CH₂SCH₂CH₂SH
CH₃SCH₂CH(CH₃)SH
CH₃CH₂CH₂CH₂SCH₂CH(CH₃)SH
C₆H₅SCH₂CH₂SH
C₆H₅SCH₂CH(CH₃)SH
CH₃OCOCH₂SCH₂CH₂SH
CH₃OCOCH₂SCH₂CH₂SCH₂CH₂SH
CH₃OCOCH₂SCH₂CH(CH₃) SH
CH₃OCOCH₂SCH₂C(CH₃)₂ SH
C₈H₁₇OCOCH₂SCH₂CH₂SH
CH₃OCOCH₂CH₂SCH₂CH₂SH
CH₃OCOCH₂CH₂SCH₂CH₂SCH₂CH₂SH
CH₃OCOCH₂CH₂SCH₂CH(CH₃)SH
CH₃OCOCH₂CH₂SCH₂CH₂CH₂SH
(HSCH₂COOCH₂)₃ C(CH₂OCOCH₂SCH₂CH₂SH)
(HSCH₂COOCH₂)₂ C(CH₂OCOCH₂SCH₂CH₂SH)₂
(HSCH₂COOCH₂) C(CH₂OCOCH₂SCH₂CH₂SH)₃
C(CH₂OCOCH₂SCH₂CH₂SH)₄
(HSCH₂CH₂COOCH₂)₃ C(CH₂OCOCH₂CH₂SCH₂CH₂SH)
(HSCH₂CH₂COOCH₂)₂ C(CH₂OCOCH₂CH₂SCH₂CH₂SH)₂
(HSCH₂CH₂COOCH₂)C(CH₂OCOCH₂CH₂SCH₂CH₂SH)₃
C(CH₂OCOCH₂CH₂SCH₂CH₂SH)₄
(HOCH₂)₃C(CH₂OCOCH₂CH₂SCH₂CH₂SH)
(HOCH₂)₂C(CH₂OCOCH₂CH₂SCH₂CH₂SH)₂
(HOCH₂)C(CH₂OCOCH₂CH₂SCH₂CH₂SH)₃
(HSCH₂CH₂COOCH₂)₂C(C₂H₅)(CH₃OCOCH₂CH₂SCH₂CH₂SH)
(HSCH₂CH₂COOCH₂) C(C₂H₂)(CH₂OCOCH₂CH₂SCH₂CH₂SH)₂
C₂H₅C(CH₂OCOCH₂CH₂SCH₂CH₂SH)₃
(HOCH₂)₃CCH₂O-CH₂C(CH₂OH)₂(CH₂OCOCH₂CH₂SCH₂CH₂SH)
(HSCH₂CH₂SCH₂CH₂COOCH₂)(CH₂OH)₂CCH₂-O-CH₂C(CH₂OH)₂(CH₂OCOCH₂CH₂SCH₂CH₂SH)
(HSCH₂CH₂SCH₂CH₂COOCH₂)(CH₂OH)₂CCH₂-O-CH₂C(CH₂OH)(CH₂OCOCH₂C₂SCH₂CH₂SH)₂
(HSCH₂CH₂SCH₂CH₂COOCH₂)₂(HOCH₂)CCH₂-O-CH₂C(CH₂OH)(CH₂OCOCH₂CH₂SCH₂CH₂SH)₂
(HSCH₂CH₂SCH₂CH₂COOCH₂)₂(CH₂OH)CCH₂-O-CH₂C(CH₂OCOCH₂CH₂SCH₂CH₂SH)₃
(HSCH₂CH₂SCH₂CH₂COOCH₂)₃CCH₂-O-CH₂C(CH₂OCOCH₂CH₂SCH₂CH₂SH)₃

In the present invention, a mixture of more of than one compound having mercapto alkylthio group can be used.

The presulfurization promoter is added at a proportion of 10 ppm to 0.5 % by weight, preferably 50 ppm to 0.5 % by weight, more preferably 100 ppm to 0.1 % by weight with respect to the total amount of the feed to promote generation of hydrogen sulfide. Advantages of the present invention can not be expected at a proportion of lower than 10 ppm, while no advantage and economical merit are obtained above 0.5 % by weight.

Temperature range in which the presulfurization promoter is used is between 180 °C and 260 °C, preferably between 200 °C and 245 °C. When the temperature is not higher than 180 °C, it takes too long time in sulfurization, while a temperature higher than 260 °C is not desirable due to formation of unsaturated hydrocarbons which cause undesirable cokes.

### Brief Description of the Drawings

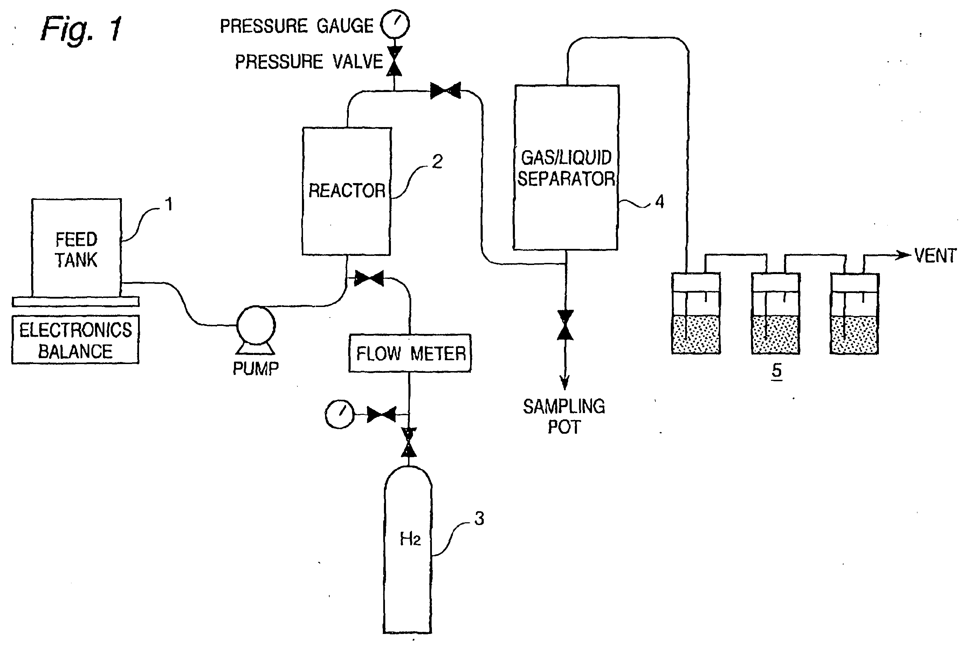

Fig. 1 is an illustrative view of presulfurization unit used in Examples.

### Description of the Preferred embodiments

Now, examples of the present invention will be described but the present invention is not limited to following illustrative examples.

An experimental presulfurization unit shown in Fig. 1 was used to evaluate how the preliminary sulfurization promoter according to the present invention promote generation of hydrogen sulfide for gas oil containing sulfur at a concentration of 1.6 % by weight obtained directly from distillation column.

The presulfurization promoter according to the present invention was added to the gas oil in a feed tank 1. Then, the gas oil was fed continuously to a reactor 2. Hydrogen gas is fed into the gas oil to be fed into the reactor 2 from a hydrogen gas bomb. In the reactor 2, 30 g of commercially available desulfurization catalyst (cobalt-molybdenum catalyst) was charged.

After fresh desulfurization catalyst was charged in the reactor 2, the reactor 2 was heated at 230 °C and the gas oil was fed at a rate of LHSV = 1.5 hr⁻¹. Hydrogen gas was fed at a rate of 25 nL per 1 L of the gas oil.

A reaction product was passed through a gas/liquid separator 4 and gas phase separated was passed through aqueous solution of sodium hydroxide to absorb hydrogen sulfide. After 6 hours from the start of operation, the aqueous solution of sodium hydroxide was neutralization-titrated to determine hydrogen sulfide absorbed.

For comparison, the same procedure was repeated but the presulfurization promoter according to the present invention was not added.

### Example 1

CH₃OCOCH₂SCH₂CH₂SH (products of Nippon Shokubai Co., Ltd.) was added as presulfurization promoter at a proportion of 1,000 ppm to the gas oil obtained directly from distillation column.

When the presulfurization promoter according to the present invention was not added, an amount of hydrogen sulfide produced was only 128 mg after 6 hours operation, while the presulfurization promoter according to the present invention was added, the amount of hydrogen sulfide produced was increased to 288 mg under the same condition. Relative increment is 125 % (=100 x (288-128) /128).

### Example 2

A mixture of
CH₃OCOCH₂ CH₂SCH₂CH₂SH and
CH₃OCOCH₂ CH₂SCH₂CH₂SCH₂CH₂SH (products of Nippon Shokubai Co., Ltd.) (weight ratio = 90:10) was used as additive and was added at a proportion of 1,000 ppm to the gas oil.

Under the same condition as Example 1, 325 mg of hydrogen sulfide was produced after 6 hours operation (relative increment of 154 %).

### Comparative Example 1

The same procedure as Example 1 was repeated but pentaerythritol tetrakis-mercapto propionate (product of Elf Atochem S.A.) was added at a proportion of 1,000 ppm to the gas oil.

Under the same condition as Example 1, 207 mg of hydrogen sulfide was produced after 6 hours operation (relative increment of 62 %).

### Comparative Example 2

The same procedure as Example 1 was repeated but methyl-3-mercapto propionate (product of Elf Atochem S.A.) was added at a proportion of 1,000 ppm to the gas oil.

Under the same condition as Example 1, 170 mg of hydrogen sulfide was produced after 6 hours operation (relative increment of 33 %).

### Comparative Example 3

The same procedure as Example 1 was repeated but dimethyl disulfide (product of Elf Atochem S.A.) was added at a proportion of 1,000 ppm to the gas oil.

Under the same condition as Example 1, 185 mg of hydrogen sulfide was produced after 6 hours operation (relative increment of 45 %).

### Comparative Example 4

The same procedure as Example 1 was repeated but dimethyl sulfide (product of Elf Atochem S.A.) was added at a proportion of 1,000 ppm to the gas oil.

Under the same condition as Example 1, 157 mg of hydrogen sulfide was produced after 6 hours operation (relative increment of 23 %).

### Comparative Example 5

The same procedure as Example 1 was repeated but 2-mercapto ethanol (product of Elf Atochem S.A.) was added at a proportion of 1,000 ppm to the gas oil.

Under the same condition as Example 1, 123 mg of hydrogen sulfide was produced after 6 hours operation. No substantial difference was observed after 6 hours operation.

The results are summarized in Table 1

**Table 1**

| | Additive | HS produced (mg) | relative % |
|---|---|---|---|
| control | none | 128 | 100 |
| Example 1 | A* | 288 | 225 |
| Example 2 | B** | 325 | 254 |
| Comparative 1 | C(CH₂OCOCH₂CH₂SH)₄ | 207 | 162 |
| Comparative 2 | CH₃OCOCH₂CH₂SH | 170 | 133 |
| Comparative 3 | CH₃SSCH₃ | 185 | 145 |
| Comparative 4 | CH₃SCH₃ | 157 | 123 |
| Comparative 5 | HOCH₂CH₂SH | 123 | 96 |

| | | | |
|---|---|---|---|
| A*: CH₃OCOCH₂SCH₂CH₂SH | | | |
| B**: a mixture of CH₃OCOCH₂CH₂SCH₂CH₂SH and CH₃OCOCH₂CH₂SCH₂CH₂SCH₂CH₂SH (90:10) | | | |

The results reveal that an amount of hydrogen sulfide in presulfurization process can be increased remarkably when a small mount of presulfurization promoter having mercaptothio group according to the present invention is incorporated.

## Claims

1. Process for presulfurizing a desulfurization catalyst for use in hydrodesulfurization which presulfurization process comprises sulfurizing the fresh metal oxide in said desulfurization catalyst using hydrogen sulfide produced from sulfur-containing compounds in a feed stream, wherein the presulfurization is effected in the presence of a least one compound having at least one mercapto alkylthio group, which is added in a proportion of from 10 ppm to 0.5% by weight with respect to the total amount of said feed stream; the said compound having at least one mercapto alkylthio group being a compound of formula (I):
(R¹, R², R³, R⁴, R⁵, R⁶) - (S- CₘH₂ₘ -SH)ₙ (I)
in which:
each of R¹, R², R³, R⁴, R⁵ and R⁶ is an organic group and is bonded to each other through one or more than one chemical bonds, at least one of R¹, R², R³, R⁴, R⁵ and R⁶ must exist in the said compound and the total carbon number of R¹, R², R³, R⁴, R⁵ and R⁶ is from 2 to 28,
m is an integer of from 2 to 4, and
n is an integer of from 1 to 6.

2. A process according to claim 1, wherein said compound of formula (I) is a compound of formula (A):
R-Q-S-C_{z}H_{2z}SH (A)
where
z is an integer of 2 to 4
Q is alkylene of 1 to 4 carbons or a bond,
R is methyl or phenyl when Q is a bond and when Q is alkylene, R is selected from
HS, HO, HS(C_{y}H_{2y}S)_{w}, HO(C_{y}H_{2y}S)_{w}, CH₃S, CH₃CH₂, CH₃, CH₃OCO(C_{y}H_{2y}S)ᵥ, or CH₃(CₓH₂ₓ)OCO
wherein v is 0 or 1,
w is an integer of 1 or more,
x is an integer of 1 to 7, and
y is an integer of 1 to 4.

3. A process according to claim 1, wherein said compound of formula (I) is a compound of formula (B): 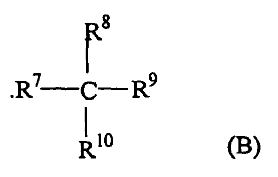 in which:
at least one of R⁷ to R'° is a group of formula (C):
-CH₂OCO(CₐH₂ₐS)_{b}C_{c}H_{2c}SC_{d}H_{2d}SH (C)
in which b is 0 or an integer of from 1 to 4, a is an integer of from 1 to 4, c is 0 or an integer of from 1 to 4, and d is an integer of from 2 to 4; and the remainder of R⁷ to R¹⁰, if any, are selected from: HSC_{q}H_{2q}COOCH₂- wherein q is an integer of from 1 to 4, CᵣH₂ᵣ₊₁ wherein r is an integer of from 1 to 4, HOCH₂-, C₂H₅, and a group of formula (D): 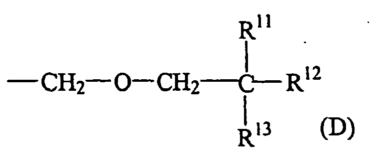
in which each of R¹¹, R¹² and R¹³ is selected from a said group of formula (C), HSC_{q}H_{2q}COOCH₂- wherein q is as defined above, and HOCH₂-.

4. A process according to any preceding claim, wherein the presulfurization is effected at a temperature between 180° and 260°C.

5. A process according to claim 4, wherein the temperature is between 200°C and 245°C.

6. Use of a presulfurization promoter which promoter comprises an organic compound having at least one mercapto alkylthio group and of formula (I) as defined in claim 1 in presulfurization of a desulfurization catalyst for use in a hydrodesulfurization unit of a petroleum refinery for high molecular hydrocarbons.

7. Use according to claim 6 wherein the compound of formula (I) is as defined in claim 2 or 3.

8. Use according to claim 6 or 7 wherein the fresh metal oxide in the said desulfurization catalyst is sulfurized with hydrogen sulfide produced from sulfur-containing compounds in a feed stream.

## Patentansprüche

1. Verfahren zur Vorsulfidierung eines Entschwefelungskatalysators zur Verwendung in der Hydroentschwefelung, wobei das Vorsulfidierungsverfahren das Sulfidieren des frischen Metalloxids in dem Entschwefelungskatalysator unter Verwendung von Hydrogensulfid, das aus schwefelhaltigen Verbindungen in einem Zufuhrstrom erzeugt wird, umfasst, wobei die Vorsulfidierung in Gegenwart wenigstens einer Verbindung mit wenigstens einer Mercaptoalkylthiogruppe durchgeführt wird, die in einem Anteil von 10 ppm bis 0,5 Gew.-%, bezogen auf die Gesamtmenge des Zufuhrstroms, zugegeben wird; wobei die Verbindung mit wenigstens einer Mercaptoalkylthiogruppe eine Verbindung der Formel (I):
(R¹, R², R³, R⁴, R⁵, R⁶)-(S-CₘH₂ₘ-SH)ₙ (I)
ist, in der:
R¹, R², R³, R⁴, R⁵ und R⁶ jeweils eine organische Gruppe sind und über eine oder über mehr als eine chemische Bindung miteinander verbunden sind, wenigstens einer von R¹, R², R³, R⁴, R⁵ und R⁶ in der Verbindung vorliegen muss und die Kohlenstoffgesamtzahl von R¹, R², R³, R⁴, R⁵ und R⁶ 2 bis 28 beträgt,
m eine ganze Zahl von 2 bis 4 ist, und
n eine ganze Zahl von 1 bis 6 ist.

2. Verfahren nach Anspruch 1, wobei die Verbindung der Formel (I) eine Verbindung der Formel (A):
R-Q-S-C_{z}H_{2z}SH (A)
ist, wobei
z eine ganze Zahl von 2 bis 4 ist,
Q ein Alkylen mit 1 bis 4 Kohlenstoffatomen oder eine Bindung ist,
R Methyl oder Phenyl ist, wenn Q eine Bindung ist und, wenn Q ein Alkylen ist, R ausgewählt ist aus
HS, HO, HS(C_{y}H_{2y}S)_{w}, HO(C_{y}H_{2y}S)_{w}, CH₃S, CH₃CH₂, CH₃, CH₃OCO(C_{y}H_{2y}S)ᵥ oder CH₃(CₓH₂ₓ)OCO,
wobei
v 0 oder 1 ist,
w eine ganze Zahl von 1 oder größer ist,
x eine ganze Zahl von 1 bis 7 ist und
y eine ganze Zahl von 1 bis 4 ist.

3. Verfahren nach Anspruch 1, wobei die Verbindung der Formel (I) eine Verbindung der Formel (B) ist: 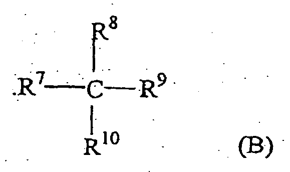 in der:
wenigstens einer von R⁷ bis R¹⁰ eine Gruppe der Formel (C) ist:
-CH₂OCO(CₐH₂ₐS)_{b}C_{c}H_{2c}SC_{d}H_{2d}SH (C)
in der b 0 oder eine ganze Zahl von 1 bis 4 ist, a eine ganze Zahl von 1 bis 4 ist, c 0 oder eine ganze Zahl von 1 bis 4 ist und d eine ganze Zahl von 2 bis 4 ist; und die Übrigen von R⁷ bis R¹⁰, falls vorhanden, ausgewählt sind aus: HSC_{q}H_{2q}COOCH₂-, wobei q eine ganze Zahl von 1 bis 4 ist, CᵣH₂ᵣ₊₁, wobei r eine ganze Zahl von 1 bis 4 ist, COCH₂-, C₂H₅, und einer Gruppe der Formel (D): 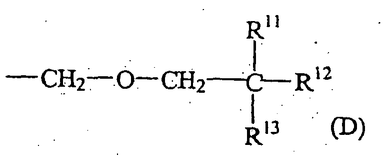
in der R¹¹, R¹² und R¹³ jeweils aus der genannten Gruppe der Formel (C), HSC_{q}H_{2q}COOCH₂-, wobei q wie oben definiert ist, und HOCH₂- ausgewählt sind.

4. Verfahren nach einem der vorhergehenden Ansprüche, wobei die Vorsulfidierung bei einer Temperatur zwischen 180° und 260°C durchgeführt wird.

5. Verfahren nach Anspruch 4, wobei die Temperatur zwischen 200°C und 245°C liegt.

6. Verwendung eines Vorsulfidierungsbeschleunigers, wobei der Beschleuniger eine organische Verbindung mit wenigstens einer Mercaptoalkylthiogruppe der in Anspruch 1 definierten Formel (I) umfasst, bei der Vorsulfidierung eines Entschwefelungskatalysators zur Verwendung in einer Hydroentschwefelungseinheit einer Erdölraffinerie für hochmolekulare Kohlenwasserstoffe.

7. Verwendung nach Anspruch 6, wobei die Verbindung der Formel (I) wie in den Ansprüchen 2 oder 3 definiert ist.

8. Verwendung nach Anspruch 6 oder 7, wobei das frische Metalloxid in dem Entschwefelungskatalysator mit Hydrogensulfid, das aus schwefelhaltigen Verbindungen in einem Zufuhrstrom erzeugt wird, sulfuriert wird.

## Revendications

1. Procédé de présulfuration d'un catalyseur de désulfuration destiné à être employé en hydrodésulfuration, lequel procédé de présulfuration comporte le fait de sulfurer l'oxyde métallique neuf présent dans ledit catalyseur de désulfuration au moyen de sulfure d'hydrogène produit à partir de composés soufrés dans un courant d'alimentation, et dans lequel procédé l'on opère la présulfuration en présence d'au moins un composé comportant au moins un groupe mercaptoalkylthio, ajouté en une quantité représentant de 10 ppm à 0,5 % du poids total dudit courant d'alimentation, et ce composé comportant au moins un groupe mercaptoalkylthio est un composé de formule (I) :
(R¹,R²,R³,R⁴,R⁵,R⁶)-(S-CₘH₂ₘ-SH)ₙ (I)
dans laquelle
- chacun des symboles R¹, R², R³, R⁴, R⁵ et R⁶ représente un groupe organique, liés les uns aux autres par une liaison chimique ou par plus d'une liaison chimique, étant entendu qu'il doit y avoir dans ledit composé au moins un groupe symbolisé par R¹, R², R³, R⁴, R⁵ ou R⁶ et que le nombre total d'atomes de carbone présents dans ces groupes symbolisés par R¹, R², R³, R⁴, R⁵ et R⁶ vaut de 2 à 28,
- m représente un nombre entier valant de 2 à 4,
- et n représente un nombre entier valant de 1 à 6.

2. Procédé conforme à la revendication 1, dans lequel ledit composé de formule (I) est un composé de formule (A) :
R-Q-S-C_{z}H_{2z}SH (A)
dans laquelle
- z représente un nombre entier valant de 2 à 4,
- Q représente une liaison ou un groupe alkylène comportant 1 à 4 atomes de carbone,
- et si Q représente une liaison, R représente un groupe méthyle ou phényle, mais si Q représente un groupe alkylène, R représente un groupe choisi parmi ceux de formules suivantes : HS-, HO-, HS(C_{y}H_{2y}S)_{w}-, HO(C_{y}H_{2y}S)_{w}-, CH₃S-, CH₃CH₂-, CH₃-, CH₃OCO(C_{y}H_{2y}S)ᵥ- et CH₃(CₓH₂ₓ)OCO-, dans lesquelles v vaut 0 ou 1, w représente un nombre entier valant 1 ou plus, x représente un nombre entier valant de 1 à 7, et y représente un nombre entier valant de 1 à 4.

3. Procédé conforme à la revendication 1, dans lequel ledit composé de formule (I) est un composé de formule (B) : 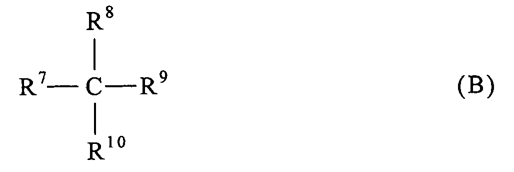 dans laquelle
- au moins l'un des symboles R⁷ à R¹⁰ représente un groupe de formule (C) :
- CH₂OCO(CₐH₂ₐS)_{b}C_{c}H_{2c}SC_{d}H_{2d}SH (C)
dans laquelle b représente 0 ou un nombre entier valant de 1 à 4, a représente un nombre entier valant de 1 à 4, c représente 0 ou un nombre entier valant de 1 à 4, et d représente un nombre entier valant de 2 à 4,
- et les symboles R⁷ à R¹⁰ restants, s'il y en a, représentent des groupes choisis parmi ceux de formule HSC_{q}H_{2q}COOCH₂- où q représente un nombre entier valant de 1 à 4, CᵣH₂ᵣ₊₁- où r représente un nombre entier valant de 1 à 4, HOCH₂- ou C₂H₅-, et les groupes de formule (D) : 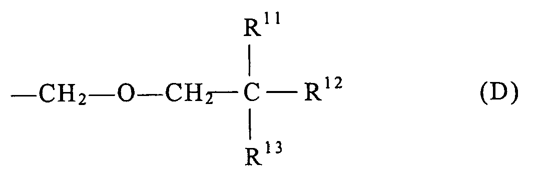 dans laquelle chacun des symboles R¹¹, R¹² et R¹³ représente une entité choisie parmi un groupe représenté par la formule (C), un groupe de formule HSC_{q}H_{2q}COOCH₂- où q a la signification indiquée ci-dessus, et un groupe de formule HOCH₂-.

4. Procédé conforme à l'une des revendications précédentes, dans lequel on opère la présulfuration à une température de 180 à 260 °C.

5. Procédé conforme à la revendication 4, dans lequel la température vaut de 200 à 245 °C.

6. Emploi d'un promoteur de présulfuration, comprenant un composé organique qui comporte au moins un groupe mercaptoalkylthio et qui est de formule (I) définie dans la revendication 1, dans la présulfuration d'un catalyseur de désulfuration destiné à servir dans une unité d'hydrodésulfuration d'une raffinerie de pétrole fournissant des hydrocarbures à masse moléculaire élevée.

7. Emploi conforme à la revendication 6, dans lequel le composé de formule (I) est du type défini dans la revendication 2 ou 3.

8. Emploi conforme à la revendication 6 ou 7, dans lequel l'oxyde métallique neuf présent dans ledit catalyseur de désulfuration est sulfuré au moyen de sulfure d'hydrogène produit à partir de composés soufrés dans un courant d'alimentation.
